# EUROPÄISCHE PATENTANMELDUNG

(11) **EP 1 053 867 A2**
(43) Veröffentlichungstag der Anmeldung: **22.11.2000**
(21) Anmeldenummer: 00110801.8
(22) Anmeldetag: 20.05.2000
(51) Int. Cl.: B32B 27/12

(54) **Flächenförmiges, transluzentes Element für die Bauindustrie**

(30) Priorität: 21.05.1999 DE 19923436
(71) Anmelder: Blum, Rainer, 71229 Leonberg (DE); Sikatec GmbH, 95100 Selb (DE)
(72) Erfinder: Blum, Rainer, Dr. habil., 71229 Leonberg (DE); Körnig, Uwe, 95100 Selb (DE)
(74) Vertreter: Neumann, Gerd, Dipl.-Ing.

(57) **Zusammenfassung**

In der Bauindustrie werden auch größere Flächen von Membranen abgedeckt. Sie haben den Vorteil, dass sie lichtdurchlässig sind. Der Vorteil der Lichtdurchlässigkeit bedingt aber auch den Durchtritt von Wärmestrahlen. Diese können insbesondere in heißen Ländern sehr nachteilig sein. Es ist bekannt, eine Glasscheibe mit einer Beschichtung zu versehen, die die Abstrahlung der Wärmestrahlen verhindert. Man verwendet dazu z. B. dünne Folien, die eine low e-Eigenschaft (low-emittence) haben. Glas ist aber für größere Fläche zu schwer und wegen der Sprödigkeit zu gefährlich. Man kann ein transluzentes Element auch durch ein beschichtetes Gewebe mit genügender Festigkeit herstellen. Um nunmehr eine solche Membrane auch mit einer low-e-Beschichtung versehen zu können, wird vorgeschlagen, die Beschichtung aus Silikon oder modifiziertem PTFE herzustellen und diese mit einer weiteren low-e-Beschichtung zu versehen zur Verhinderung der Abstrahlung im infraroten Bereich.

## Beschreibung

Im Bauwesen haben sich Membranbauten einen noch immer wachsenden Markt vor allem in heißen Ländern erobert. Bei dieser Bauweise wird eine dünne Haut vorzugsweise aus einem entweder PVC- oder PTFE oder Silikon-beschichteten Glasfaser- oder Polyestergewebe als Raumabschluss verwendet. Diese Haut, die eine Dicke von ungefähr 1 mm hat, wird so weit vorgespannt, dass bei maximaler Belastung immer noch ein Zugspannungszustand herrscht. Damit wird ein Versagen durch Knicken oder Beulen ausgeschlossen. Es lassen sich große Spannweiten kostengünstig erzielen.

Der architektonische Eindruck dieser Bauten wird bestimmt durch die Transluzenz genannte Eigenschaft, einen gewissen Anteil des Tageslichts durchzulassen, charakteristischerwein zwischen 10 und 30 %.

Die Bauphysik dieser Bauten ist aber noch unterentwickelt: Die Wärmedämmung von solchen Membranen ist sehr gering ebenso wie die Schallisolation. Auch die Schallabsorption, eine für die Raumakustik wichtige Größe, ist nicht sehr hoch. Mit anderen Worten: Man hat einen großen, hellen Raum von fast beliebiger Spannweite, dessen Bauphysik aber verbessert werden muss.

Hier hilft das Einziehen einer inneren Membran, die zumindest die Dämmeigenschaften für Wärme dadurch verbessert, dass die Wärmeleitung vermindert wird. Diese innere Membran mindert natürlich die Transluzenz der Abdeckung insgesamt. Man muss also solche beschichteten Gewebe verwenden, deren Kombination immer noch genügend Licht durchlässt.

Bei der Untersuchung weiterer Verbesserungsmöglichkeiten muss man zuerst einmal die Möglichkeiten des Wärmetransports untersuchen: Man kann Wärme von einem Ort zum anderen mit Hilfe von drei Möglichkeiten transportieren:
1. Durch Konvektion. Hierbei strömt ein Medium höherer Temperatur zu einem Ort kühlerer Temperatur und transportiert so Wärme. In unserem Fall ist das Medium vorzugsweise die Luft. Die Konvektion ist in großen Räumen mit starken Temperaturdifferenzen wichtig, sie kann bis zwischen 5 und 40 % des Wärmetransports ausmachen.
2. Durch Wärmeleitung. Hier wird ein fester Körper an einer Stelle aufgeheizt. Die erhöhte Temperatur breitet sich in dem Körper selbst aus. Um dieses zu verhindern, werden Mauern so gebaut, dass sie ein schlechtes Wärmeleitvermögen besitzen.
3. Durch Strahlung. Ein Körper höherer Temperatur strahlt gegenüber einem Körper niedrigerer Temperatur eine elektromagnetische Strahlung ab, deren Intensität mit der Temperaturdifferenz zunimmt. Diese Art des Wärmetransports hat man lange vernachlässigt, sie wird aber in der letzten Zeit immer wichtiger genommen. Sie kann bis zu 90 % zum Wärmetransport beitragen. Um den Transport durch Strahlung zu unterbinden, der in vielen Fällen die anderen Transportmöglichkeiten übersteigt, wurden zum Beispiel Wärmeschutzgläser entwickelt. Diese werden speziell in Wintergärten eingesetzt, um den Treibhauseffekt zu vermeiden. Der Treibhauseffekt entsteht dadurch, dass eine Glasscheibe durch die Sonne aufgeheizt wird. Dadurch entsteht eine Temperaturdifferenz zum Hintergrund und die warme Scheibe strahlt im infraroten Bereich ab und transportiert so Wärme ins Innere.

Der vergleichbare Effekt sorgt im Winter für eine schnellere Auskühlung. Hier hat dann die Scheibe eine höhere Strahlungstemperatur als die Umgebung und als der klare Himmel und die Scheibe strahlt nach außen hin ab.

Beschichtet man nun die Scheibe mit einer Schicht, die die Wärmestrahlung unterbindet, so wird die Abstrahlung verhindert und der Wärmetransport durch Strahlung unterbleibt. Wie wichtig dies ist, wird durch die Tatsache klar, dass, wie oben erwähnt, bis zu 90 % des Wärmetransports durch Strahlung vor sich gehen kann. Die Beschichtung der Scheibe kann nun entweder durch das Aufbringen einer dünnen mit low-e-Eigenschaften ausgerüsteten Folie erfolgen oder durch direktes Beschichten auf das Glas aufgebracht werden.

Das Material Glas ist zum Überdecken von größeren Flächen nicht geeignet. Zum einen ist das spezifische Gewicht von Glas zu groß und zusätzlich ist Glas zu spröde. Daraus folgt, dass größere überdeckte Flächen zu schwer werden und zusätzlich die Gefahr besteht, dass durch Umwelteinflüsse oder auch nur durch sich ändernde Spannungen, Glasflächen zersplittern.

Der Erfindung liegt die Aufgabe zugrunde, ein flächenförmiges Element für die Bauindustrie zu finden, mit dem auch größere Flächen wie Sportstadien, Flugzeughallen, Empfangshallen an Flughäfen od. dgl. überspannt werden können. Dabei soll auf den Vorteil des Glases, nämlich seine Lichtdurchsichtigkeit, nicht verzichtet werden.

Zur Lösung der gestellten Aufgabe ist nach der Erfindung vorgesehen,
a) ein zugfestes Trägergewebe wie Kunstfaser- oder Glasfasergewebe zu verwenden, das
b) mit einer durchscheinenden Beschichtung zu versehen ist,
   wobei die Beschichtung
c) aus Silikon oder modifiziertem PTFE hergestellt und diese
d) mit einer weiteren low-e-Beschichtung (low-emittence) versehen ist, um die Abstrahlung im infraroten Bereich zu verhindern.

Man hätte auf die Idee kommen können, die genannten beschichteten Folien alleine für das gesuchte Flächenelement zu verwenden. Diese Folien können aber alleine nicht weit gespannt werden, da sie keine ausreichenden Festigkeiten für das Überspannen größerer Flächen aufweisen.

Bislang wurde noch nicht versucht, beschichtetes Gewebe, also eine "Folie mit ausreichenden Festigkeiten", mit einer low-e-Schicht zu versehen. Am einfachsten wäre eine Laminierung der oben erwähnten Folie direkt auf das beschichtete Gewebe. Das entstehende Laminat ist aber schwer zu handhaben, teuer in der Herstellung und sperrig beim Transport und bei der Montage.

Besser wäre eine direkte Aufbringung der low-e-Beschichtung auf das beschichtete Gewebe. Hier gibt es jedoch große Probleme:
PVC kann nicht beschichtet werden, da der notwendige Weichmacher während des Beschichtungsprozesses, der im Vakuum stattfindet, ausdampft und das PVC seine Geschmeidigkeit verliert.
PTFE kann als Fluorpolymer nicht beschichtet werden, da die low-e-Schicht nicht darauf haftet. Allerdings gibt es PTFE-Modifikationen, die eine Beschichtung eventuell erlauben.

Mit der Idee, die durchsichtige Beschichtung des Trägergewebes aus Silikon oder modifiziertem PTFE herzustellen, konnte das Problem gelöst werden. Silikonbeschichtungen lassen sich problemlos mit einer low-e-Schicht versehen. Eine solche Gewebe-Gesamt-Beschichtung unterbindet, auch bei großflächig überspannten Hallen angewendet, pro Element die Wärmestrahlung einer aufgeheizten Membran, wenn innen angebracht, ins Innere und hilft damit, Energie zum Kühlen zu sparen und das Raumklima zu verbessern. Wird sie außen angebracht, so verhindert sie die Abstrahlung nach außen und hilft, Heizenergie zu sparen. Verwendet man innen eine zusätzliche Membran, so ist die Wärmeisolierung verbessert, der Wärmetransport durch Konvektion wird reduziert.

Mit einem solchen Flächenelement können große Fläche überspannt und die definierten Strahlungsbedingungen erzielt werden.

Hat man an den Innenraum eines Membranbaus noch raumakustische Anforderungen, so kann man das Problem dadurch lösen, dass man eine Innenmembran benützt, die eine Mikroperforation aufweist. Die Arbeitsweise einer solchen Mikroperforation ist in der Praxis bekannt. Hier wird abweichend von dem vorbekannten Vorgehen die starre Wand hinter der mikroperforierten Folie durch die nachgiebige Außenmembran ersetzt. Die Abstände sind entsprechend zu wählen. Die Mikroperforation mindert die low-e-Eigenschaften nur unwesentlich, verbessert aber im Zusammenspiel mit der Außenmembran die raumakustischen Eigenschaften erheblich.

Die Mikroperforation bringt nun Probleme mit sich: Es werden offene Schnittkanten geschaffen, durch die Feuchtigkeit sowohl in das Gewebe wie auch in die low-e-Schicht eindringen kann. Es gilt also, diese Schnittkanten bei der Herstellung der Perforation gleichzeitig zu versiegeln. Das könnte dadurch geschehen, dass die perforierenden Nadeln hohl sind und durch Mikroöffnungen eine Versiegelung beim Perforieren selbst erzeugen. Dies ist auch durch Hinzufügen von Hilfsmaterialien möglich.

Wird das Gewebe nicht mikroperforiert, so kann man, wenn man die Beschichtung auf beiden Seiten aufbringt, die Membran auch als Außenmembran benutzen und damit sowohl die Abstrahlung nach innen wie die nach Außen unterbinden und erhält damit eine Strahlenbarriere.

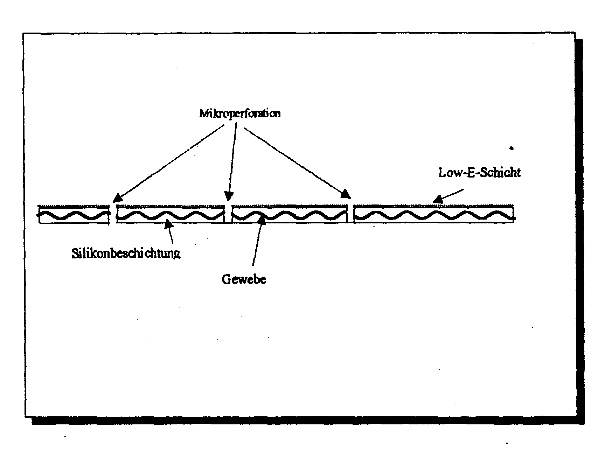

## Patentansprüche

1. Flächenförmiges, transluzentes Element für die Bauindustrie zum Abtrennen eines Innenraums gegenüber dem Äußeren, das zusammengesetzt ist aus einem
a) zugfesten Trägergewebe wie Kunstfaser- oder Glasfasergewebe, das
b) mit einer durchscheinenden Beschichtung versehen ist,
dadurch gekennzeichnet, dass die Beschichtung
c) aus Silikon oder modifiziertem PTFE hergestellt und diese
d) mit einer weiteren low-e-Beschichtung (low-emittence) versehen ist zur Verhinderung der Abstrahlung im infraroten Bereich.

2. Flächenförmiges Element nach Anspruch 1, dadurch gekennzeichnet, dass die low-e-Beschichtung beidseitig aufgebracht ist.

3. Flächenförmiges Element nach Anspruch 1 und 2, dadurch gekennzeichnet, dass die low-e-Beschichtung auf einen dünnen Kunststofffilm aufgebracht ist, der auf das Gewebe auflaminiert ist.

4. Flächenförmiges Element nach Anspruch 1 - 3, dadurch gekennzeichnet, dass die low-e-Beschichtung aufgesputtert ist.

5. Flächenförmiges Element nach Anspruch 1 - 4, dadurch gekennzeichnet, dass die low-e-Schicht durch einen Lack gegen Korrosion geschützt ist.

6. Flächenförmiges Gebilde nach Anspruch 1 - 5, dadurch gekennzeichnet, dass das Gebilde mikroperforiert ist.

7. Flächenförmiges Gebilde nach Anspruch 1 - 6, dadurch gekennzeichnet, dass die Kanten der Perforationslöcher gegen Eindringen von Feuchte geschützt sind.

8. Flächenförmiges Gebilde nach Anspruch 7, dadurch gekennzeichnet, dass die Kanten der Perforationslöcher verschweißt sind.

9. Flächenförmiges Gebilde nach Anspruch 1 - 8, dadurch gekennzeichnet, dass das Gewebe aus zugfesten Polyester- oder Glasfasern hergestellt ist.

10. Flächenförmiges Gebilde nach Anspruch 1 - 9, dadurch gekennzeichnet, dass die Beschichtung des Gewebes eine Verschweißung oder Vulkanisierung zulässt.
